# EUROPEAN PATENT APPLICATION

(11) **EP 1 355 469 A1**
(43) Date of publication of application: **22.10.2003**
(21) Application number: 02252770.9
(22) Date of filing: 19.04.2002
(51) Int. Cl.: H04L 29/06

(54) **Voice data transmission**

(71) Applicant: Red-M (Communications) Limited, Wooburn Green, Buckinghamshire HP10 0HH (GB)
(72) Inventor: Franks, Roland, Hazlemere, Buckinghamshire HP15 7QX (GB)
(74) Representative: Finnie, Peter John

(57) **Abstract**

According to the invention there is provided a method of data transfer using a Bluetooth connection comprising the step of transferring voice data over a Logical Link Adaptation Protocol (L2CAP) session. Preferably, a first L2CAP session is used for a data stream and a second L2CAP session is used as a control stream.

Carrying the voice data as packetized data on an L2CAP session instead of using one or more SCO links increases the aggregate bandwidth and improves the quality of the voice signal.

## Description

### Field of the Invention

The present invention relates to the transmission of voice data in Bluetooth communications systems.

### Background to the Invention

Wireless types of devices and networks are becoming more widespread. Wireless communication can be broken down into one of three main categories, radio, cellular and local. Radio communications are used for mainly long distance work, and cellular communications are used for mobile phones and the like.

In addition to this, local communication standards are also provided for short-range radio communication. One such short-range radio communication radio system is Bluetooth which can be used to provide customer premises wireless links for voice, data and multi-media applications.

A Bluetooth Radio Frequency (RF) system is a Fast Frequency Hopping Spread Spectrum (FFHSS) system in which packets are transmitted in regular time slots on frequencies defined by a pseudo random sequence. A Frequency Hopping system provides Bluetooth with resilience against interference. Interference may come from a variety of sources including microwave ovens and other communication systems operating in this unlicensed radio band which can be used freely around the world. The system uses 1MHz frequency hopping steps to switch among 79 frequencies in the 2.4GHz Industrial, Scientific and Medical (ISM) band at 1600 hops per second with each channel using a different hopping sequence.

The Bluetooth baseband architecture includes a Radio Frequency transceiver (RF), a Link Controller (LC) and a Link Manager (LM) implementing the Link Manager Protocol (LMP).

Bluetooth version 1.1 supports asymmetric data rates of up to 721 Kbits per second and 57.6Kbits per second and symmetric data rates of up to 432.5Kbits per second. Data transfers may be over synchronous connections, Bluetooth supports up to three pairs of symmetric synchronous voice channels of 64Kbits per second each.

Bluetooth connections operate in something called a piconet in which several nodes accessing the same channel via a common hopping sequence are connected in a point to multi-point network. The central node of a piconet is called a master that has up to seven active slaves connected to it in a star topology. The bandwidth available within a single piconet is limited by the master, which schedules time to communicate with its various slaves. In addition to the active slaves, devices can be connected to the master in a low power state known as park mode, these parked slaves cannot be active on the channel but remain synchronised to the master and addressable. Having some devices connected in park mode allows more than seven slaves be attached to a master concurrently. The parked slaves access the channel by becoming active slaves, this is regulated by the master.

Multiple piconets with overlapping coverage may co-operate to form a scatternet in which some devices participate in more that one piconet on a time division multiplex basis. These and any other piconets are not time or frequency synchronised, each piconet maintains its own independent master clock and hopping sequence.

The Bluetooth specification has therefore been designed for the primary purpose of allowing electronic devices to wirelessly communicate with each other in a local environment. The system is typically utilized in an environment in which one-to-one communication is achieved between two Bluetooth enabled devices.

Almost any electronic device can be Bluetooth enabled. Common electronic device such as mobile telephones, PDAs, laptops, PCs and printers are increasingly being manufactured so as to be Bluetooth enabled. It is also possible to adapt existing devices to be Bluetooth enabled.

In a Bluetooth system data can be transferred using either a Synchronous Connection-Oriented (SCO) link or an Asynchronous Connection-Less (ACL) link. A SCO link is a symmetric, point-to-point link between a master and a specific slave. The SCO link reserves slots at regular intervals and can therefore be considered as a circuit switched connection between the master and the slave. An SCO link is typically used to support time-bounded information like voice. SCO links are used because they have guaranteed quality of service and it is easy to convert the data to and from audio using a simple hardware device called a codec. Further detail on the nature of SCO links can be found in the Bluetooth specification, available from www.bluetooth.com.

However the quality of voice carried on a SCO link deteriorates to an unacceptable level well before the associated ACL connection becomes unusable in noisy environments, or when the Bluetooth device goes out of range.

A further problem with SCO links is that when a SCO link is established between two devices the available bandwidth between the two devices drops by considerably more than the 64kb/s that the SCO link can carry, owing to the scheduling algorithm used.

### Summary of the Invention

According to a first aspect of the present invention there is provided a method of data transfer using a Bluetooth connection comprising the step of transferring voice data over a Bluetooth data channel, the voice data being encapsulated using Real Time Protocol (RTP).

Preferably, the voice data is transferred over a Logical Link Adaptation Protocol (L2CAP) session.

Preferably, a first L2CAP session is used for a data stream and a second L2CAP session is used as a control stream.

According to a second aspect of the present invention there is provided a computer program product comprising computer program code means adapted to perform the method of the first aspect of the present invention. The computer program product may software be embodied on a computer readable medium.

Carrying the voice data as packetized data on an L2CAP session instead of using one or more SCO links increases the aggregate bandwidth and improves the quality of the voice signal.

### Brief Description of the Drawings

Examples of the present invention will now be described with reference to the accompanying drawings, in which:
Figure 1 shows a Bluetooth telephone in communication with a telephony gateway;
Figures 2a to 2e shows suitable protocol stacks for use in the present invention; and,
Figure 3 shows a Bluetooth headset in communication with an audio gateway via an intermediate Bluetooth device.

### Detailed Description

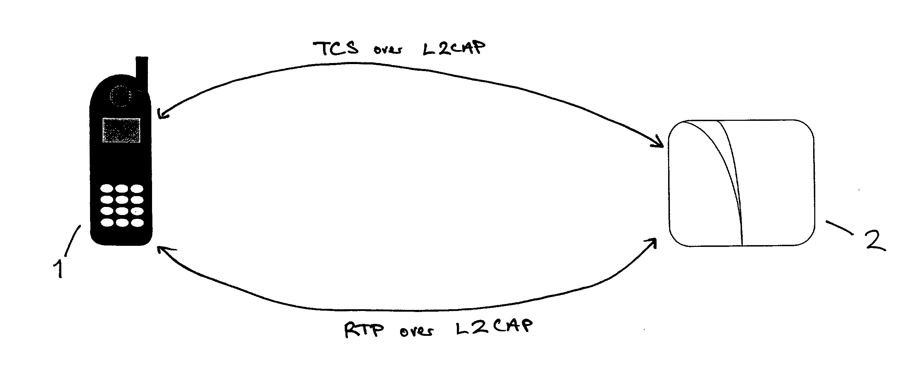

Figure 1 illustrates a simple Bluetooth link between a telephone 1 and a telephony gateway 2 in accordance with the present invention. Voice data is transferred between the telephone 1 and the gateway 2 using two L2CAP sessions.

The L2CAP sessions provide control over the quality of service. The voice data is carried over the L2CAP session in the same way that voice is carried over an ethernet i.e. it is packetized. The IETF Real Time Protocol is used to encapsulate the voice data, with one L2CAP session being used for the data stream and one for the control stream. Error detection and correction is carried out algorithmically on a processing device at the receiving end.

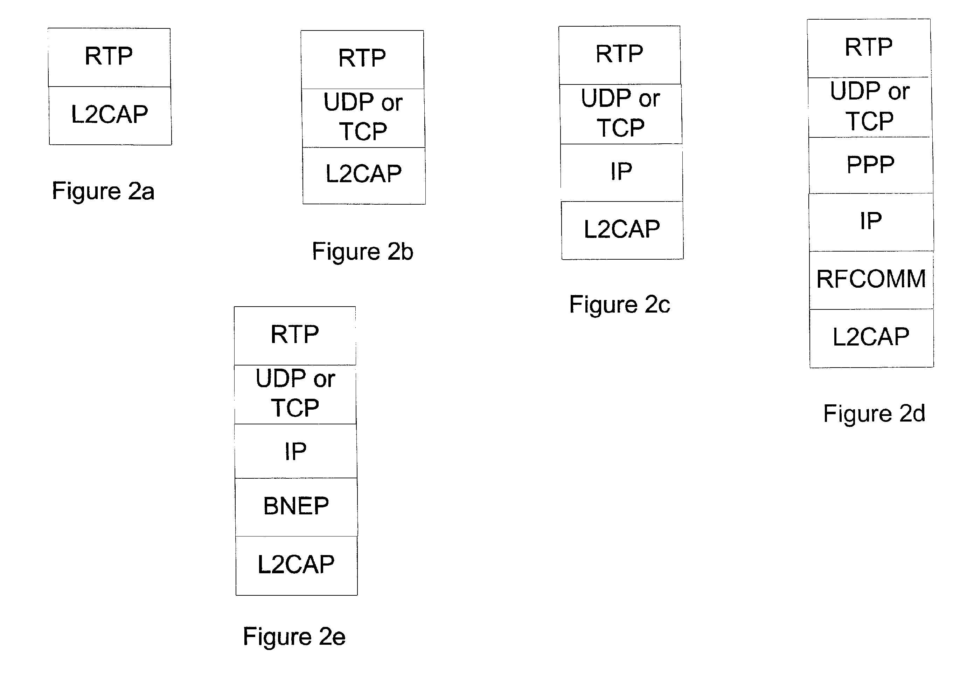

Figures 2a to 2e show examples of suitable protocol stacks for transferring voice data over a Bluetooth data channel. Figure 2a shows RTP over L2CAP as described above. Figure 2b shows RTP over User Datagram Protocol (UDP) or Transmission Control Protocol (TCP) over L2CAP. Figure 2c shows RTP, over UDP or TCP, over Internet Protocol (IP), over L2CAP. Figure 2d shows RTP, over UDP or TCP, over IP, over Point to Point Protocol (PPP), over RFCOMM over L2CAP. Finally, Figure 2e shows RTP, over UDP or TCP, over IP, over Bluetooth Network Encapsulation Protocol (BNEP), over L2CAP. The BNEP is used to manage the L2CAP sessions.

The packetized audio data must be processed in order to put it in a suitable form for a codec. In view of this processing, air formats other than CVSD and G.711 are possible. For instance, bandwidth requirements could be further reduced by encoding the data using a GSM format.

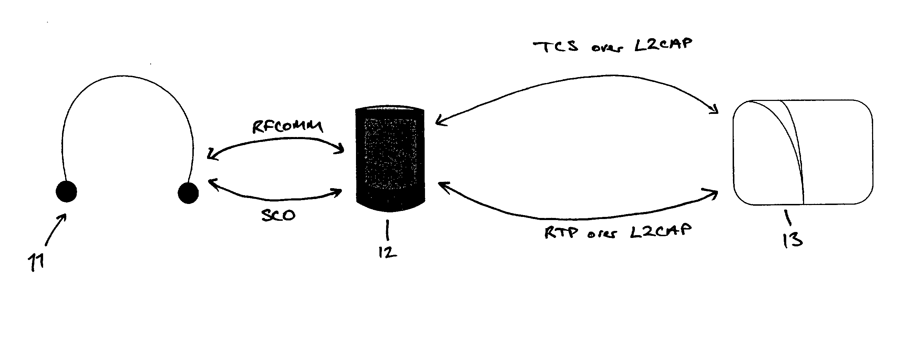

Figure 3 shows a Bluetooth communications system comprising a headset 11, a PDA 12 and a telephony gateway 13. The headset 11 and PDA 12 are connected using a conventional SCO link over RFCOMM. However, the PDA 12 and gateway 13 are connected using TCS protocol using L2CAP sessions. Audio data from the headset 11 can be transmitted to the gateway 13 via the PDA 12. The PDA 12 runs a software application that converts the data from SCO format to ACL format. The headset acts to extend the range of the headset 11 and the use of L2CAP sessions in place of a SCO link allows the range of the PDA as an audio device to be extended and increases the available bandwidth.

## Claims

1. A method of data transfer using a Bluetooth connection comprising the step of transferring voice data over a Bluetooth data channel, the voice data being encapsulated using Real Time Protocol (RTP).

2. A method according to claim 1, wherein the voice data is transferred over a Logical Link Adaptation Protocol (L2CAP) session.

3. A method according to claim 1 or 2, wherein a first L2CAP session is used for a data stream and a second L2CAP session is used as a control stream.

4. A computer program product comprising computer program code means adapted to perform the method of any one of the preceding claims.

5. A computer program product according to claim 4, comprising software embodied on a computer readable medium.
